(19) **Europäisches Patentamt / European Patent Office / Office européen des brevets**

(11) **EP 4 578 841 A1**

(12) **EUROPEAN PATENT APPLICATION**
published in accordance with Art. 153(4) EPC

(43) Date of publication:
**02.07.2025 Bulletin 2025/27**

(21) Application number: **23879049.7**

(22) Date of filing: **16.10.2023**

(51) International Patent Classification (IPC):
$C03C\ 3/12$ *(2006.01)*   $C03C\ 3/097$ *(2006.01)*
$C03C\ 3/095$ *(2006.01)*   $C03C\ 3/093$ *(2006.01)*
$C03C\ 3/091$ *(2006.01)*   $C03C\ 3/089$ *(2006.01)*
$C03C\ 3/087$ *(2006.01)*   $C03C\ 3/078$ *(2006.01)*
$B60J\ 1/18$ *(2006.01)*   $B60J\ 1/08$ *(2006.01)*
$B60J\ 1/00$ *(2006.01)*

(86) International application number:
**PCT/CN2023/124644**

(87) International publication number:
**WO 2024/083060 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.10.2022   CN 202211265283**

(71) Applicant: **Fuyao Glass Industry Group Co., Ltd.
Fuzhou, Fujian 350300 (CN)**

(72) Inventors:
• **LIN, Jun
Fuzhou, Fujian 350300 (CN)**
• **WANG, Zhe
Fuzhou, Fujian 350300 (CN)**
• **WANG, Li
Fuzhou, Fujian 350300 (CN)**

(74) Representative: **Mewburn Ellis LLP
Aurora Building
Counterslip
Bristol BS1 6BX (GB)**

(54) **LAMINATED GLASS AND VEHICLE**

(57)   Laminated glass (100) is provided. The laminated glass (100) includes outer glass (10), an intermediate layer (30), and inner glass (20). The intermediate layer (30) is located between the outer glass (10) and the inner glass (20). A composition of the outer glass (10) and a composition of the inner glass (20) both include total iron expressed as $Fe_2O_3$. A mass percentage content of the total iron in the outer glass (10) is $W_{outer}$ based on a mass of the outer glass (10), a mass percentage content of the total iron in the inner glass (20) is $W_{inner}$ based on a mass of the inner glass (20), and $W_{outer}$ and $W_{inner}$ satisfy: $10\% \geq W_{outer} * T_{outer} + W_{inner} * T_{inner} \geq 4\%$. $T_{outer}$ is a thickness of the outer glass (10) in a unit of mm, and $T_{inner}$ is a thickness of the inner glass (20) in a unit of mm.

FIG. 2

**Description**

CROSS-REFERENCE TO RELATED APPLICATION(S)

This application claims priority to Chinese Patent Application No. 202211265283.3, filed with the China National Intellectual Property Administration on October 17, 2022 and entitled "LAMINATED GLASS AND VEHICLE", the entire disclosure of which is hereby incorporated by reference.

TECHNICAL FIELD

This disclosure relates to the field of glass technology, and in particular, to laminated glass and a vehicle.

BACKGROUND

According to regulations, in an existing vehicle, a front windshield and front-door glass have a visible region requiring a high visible light transmittance, but glass mounted at a rear door, a sunroof, a rear window, and the like is often required to have a high heat insulation performance, for which glass with a high visible light transmittance cannot satisfy the requirement for heat insulation.

SUMMARY

An objective of the present disclosure is to provide laminated glass and a vehicle. The laminated glass has a low visible light transmittance (TL) and total solar energy transmittance (TTS), and has a high heat insulation performance, which can be used as a component that has a high requirement for heat insulation performance, such as rear-door glass, sunroof glass, or rear window glass.

Laminated glass is provided in the present disclosure. The laminated glass includes outer glass, an intermediate layer, and inner glass. The intermediate layer is located between the outer glass and the inner glass. A composition of the outer glass and a composition of the inner glass both include total iron expressed as $Fe_2O_3$. A mass percentage content of the total iron in the outer glass is $W_{outer}$ based on a mass of the outer glass, a mass percentage content of the total iron in the inner glass is $W_{inner}$ based on a mass of the inner glass, and $W_{outer}$ and $W_{inner}$ satisfy: $10\% \geq W_{outer} * T_{outer} + W_{inner} * T_{inner} \geq 4\%$. $T_{outer}$ is a thickness of the outer glass in a unit of mm, and $T_{inner}$ is a thickness of the inner glass in a unit of mm.

$W_{outer}$ ranges from 1 wt% to 1.9 wt%, and $W_{inner}$ ranges from 0.08 wt% to 1.9 wt%.

$T_{outer}$ ranges from 1.6 mm to 5.0 mm, and $T_{inner}$ ranges from 0.1 mm to 1.2 mm.

The laminated glass has a total solar energy transmittance less than or equal to 45 wt%.

The laminated glass has a visible light transmittance less than or equal to 25 wt%.

In the outer glass, a ratio of a content of ferrous iron to a content of ferric iron ranges from 0.25 to 0.67. In the inner glass, a ratio of a content of ferrous iron to a content of ferric iron ranges from 0.25 to 0.67.

The composition of the outer glass further includes total cobalt expressed as $Co_2O_3$. A mass percentage content of the total cobalt in the outer glass is $W_{Co}$ based on the mass of the outer glass, and $W_{Co}$ ranges from 0.01 wt% to 0.04 wt%.

$$W_{outer}: W_{Co} = 55 - 75.$$

Based on the mass of the outer glass, the composition of the outer glass includes $SiO_2$ of 65 wt% - 75 wt%, $Na_2O$ of 10 wt% - 20 wt%, CaO of 5 wt% - 15 wt%, MgO of 0 wt% - 5 wt%, $K_2O$ of 0 wt% - 3 wt%, $Al_2O_3$ of 0 wt% - 5 wt%, $Fe_2O_3$ of 1 wt% - 1.9 wt%, $Co_2O_3$ of 0.01 wt% - 0.1 wt%, $Cr_2O_3$ of 0 wt% - 0.1 wt%, $CeO_2$ of 0 wt% - 0.1 wt%, MnO of 0 wt% - 0.01 wt%, NiO of 0 wt% - 0.01 wt%, $ZrO_2$ of 0 wt% - 1 wt%, $B_2O_3$ of 0 wt% - 1 wt%, and $P_2O_5$ of 0 wt% - 1 wt%.

Based on the mass of the inner glass, the composition of the inner glass includes $SiO_2$ of 55 wt% - 65 wt%, $Al_2O_3$ of 0 wt% - 22 wt%, $Na_2O$ of 8 wt% - 18 wt%, $Li_2O$ of 0 wt% - 5 wt%, CaO of 0 wt% - 2 wt%, MgO of 0 wt% - 5 wt%, $K_2O$ of 0 wt% - 10 wt%, $Fe_2O_3$ of 0.08 wt% - 1.9 wt%, $ZrO_2$ of 0 wt% - 2 wt%, $B_2O_3$ of 0 wt% - 5 wt%, and $P_2O_5$ of 0 wt% - 1 wt%.

The composition of the inner glass includes alkaline-earth metal oxide, and a total content of the alkaline-earth metal oxide is less than 5 wt% based on the mass of the inner glass.

A transmitted color of the outer glass has a value of *L* ranging from 29 to 56, a value of *a* ranging from -5 to -2, and a value of *b* ranging from 2 to 4 in a color space Lab.

A transmitted color of the inner glass has a value of *L* ranging from 40 to 92, a value of *a* ranging from -4 to 1, and a value of *b* ranging from 0 to 2 in a color space Lab.

A vehicle is further provided in the present disclosure. The vehicle includes a vehicle body and the laminated glass described above. The laminated glass is mounted at the vehicle body.

For the laminated glass provided in the present disclosure, the content $W_{outer}$ of the total iron in the outer glass and the content $W_{inner}$ of the total iron in the inner glass are controlled to satisfy: $10\% \geq W_{outer} * T_{outer} + W_{inner} * T_{inner} \geq 4\%$, and thus the formed laminated glass can have a low visible TL and TTS. As such, the laminated glass has a good heat insulation performance, which can be used as a component that has a high requirement for heat insulation performance, such as rear-door glass, sunroof glass, or rear window glass. In addition, $Fe_2O_3$ is added to both the outer glass and the inner glass in the laminated glass, thereby avoiding the problems of excessive cost and high production energy consumption due to the use of clear glass.

BRIEF DESCRIPTION OF THE DRAWINGS

To describe technical solutions in embodiments of the present disclosure or in the related art more clearly, the following will briefly introduce the accompanying drawings required for describing the embodiments or the related art. Apparently, the accompanying drawings in the following description illustrate merely some embodiments of the present disclosure, and those of ordinary skill in the art may obtain other accompanying drawings from these accompanying drawings without creative effort.

FIG. 1 is a schematic structural view of a vehicle provided in the present disclosure.
FIG. 2 is a schematic cross-sectional structural view of laminated glass in the vehicle illustrated in FIG. 1.

Reference signs in the accompanying drawings are described as follows: 1000 - vehicle; 100 - laminated glass; 200 - vehicle body; 10 - outer glass; 20 - inner glass; 30 - intermediate layer.

DETAILED DESCRIPTION

The following will describe technical solutions in embodiments of the present disclosure clearly and completely with reference to the accompanying drawings in embodiments of the present disclosure. Apparently, embodiments described herein are merely some embodiments, rather than all embodiments, of the present disclosure. Based on the embodiments of the present disclosure, all other embodiments obtained by those of ordinary skill in the art without creative effort shall fall within the protection scope of the present disclosure.

Laminated glass 100 provided in embodiments of the present disclosure may be applied to the field of vehicles, so as to serve a function of protection. It may be understood that, according to requirements, the laminated glass 100 may also be applied by those skilled in the art to other fields such as the architectural field. In the following embodiments of the present disclosure, for example, the laminated glass 100 is merely applied to a vehicle.

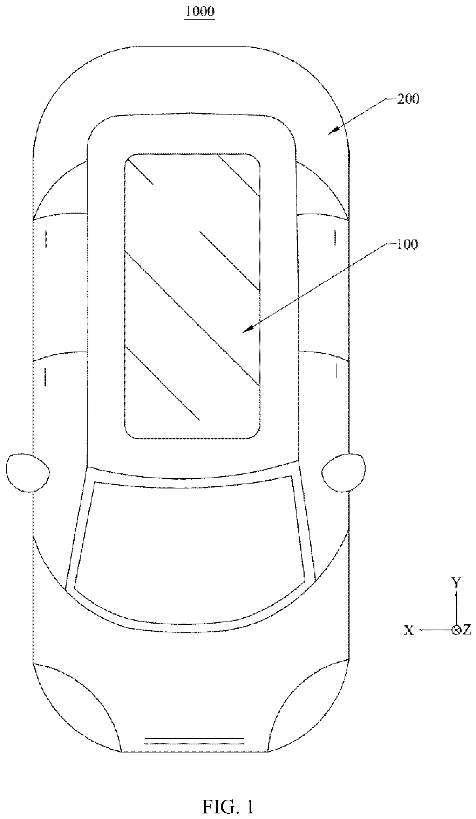

Reference is made to FIG. 1, where FIG. 1 is a schematic structural view of a vehicle 1000 provided in the present disclosure.

For ease of illustration, a width direction of the vehicle 1000 illustrated in FIG. 1 is defined as an X-axis direction, a length direction of the vehicle 1000 is defined as a Y-axis direction, and a height direction of the vehicle 1000 is defined as a Z-axis direction.

The vehicle 1000 includes laminated glass 100 and a vehicle body 200. The laminated glass 100 is mounted at the vehicle body 200. The laminated glass 100 can be used as rear-door glass, sunroof glass, rear window glass, or the like. In FIG. 1, for example, the laminated glass 100 is merely the sunroof glass.

The laminated glass 100 is configured to allow light outside the vehicle 1000 to enter the interior of the vehicle 1000, and the laminated glass 100 has a good heat insulation effect, which can improve the riding experience in the vehicle 1000. A positive direction of Z-axis is a direction from the exterior of the vehicle 1000 toward the interior of the vehicle 1000.

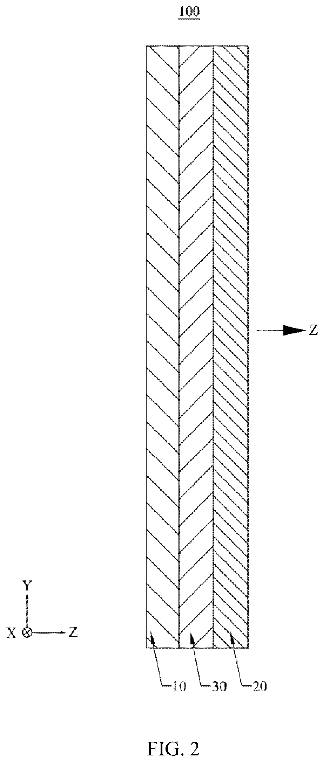

Reference is made to FIG. 2, where FIG. 2 is a schematic cross-sectional structural view of laminated glass 100 in the vehicle 1000 illustrated in FIG. 1.

In the positive direction of Z-axis, the laminated glass 100 sequentially includes outer glass 10, an intermediate layer 30, and inner glass 20. The intermediate layer 30 is located between the outer glass 10 and the inner glass 20. After the laminated glass 100 is mounted on the vehicle, the outer glass 10 faces the exterior of the vehicle 1000, and the inner glass 20 faces the interior of the vehicle 1000.

Specifically, a system of the outer glass 10 may be soda-lime silicate glass. Exemplarily, based on a mass of the outer glass 10, a composition of the outer glass 10 provided in this embodiment includes $SiO_2$ of 65 wt% - 75 wt%, $Na_2O$ of 10 wt% - 20 wt%, CaO of 5 wt% - 15 wt%, MgO of 0 wt% - 5 wt%, $K_2O$ of 0 wt% - 3 wt%, $Al_2O_3$ of 0 wt% - 5 wt%, $Fe_2O_3$ of 1 wt% - 1.9 wt%, $Co_2O_3$ of 0.01 wt% - 0.1 wt%, $Cr_2O_3$ of 0 wt% - 0.1 wt%, $CeO_2$ of 0 wt% - 0.1 wt%, MnO of 0 wt% - 0.01 wt%, NiO of 0 wt% - 0.01 wt%, $ZrO_2$ of 0 wt% - 1 wt%, $B_2O_3$ of 0 wt% - 1 wt%, and $P_2O_5$ of 0 wt% - 1 wt%.

By using mineral raw materials of the same grade, a raw sheet of the outer glass 10 is produced according to the above composition range of the outer glass 10, and then the raw sheet is sequentially subjected to cutting - edging - physical thermal strengthening, so as to obtain to-be-used outer glass 10. The physical thermal strengthening refers to

**EP 4 578 841 A1**

heating the outer glass 10 to a certain temperature between an upper annealing temperature and a softening temperature of the outer glass 10, and then rapidly cooling a surface of the outer glass 10 to below an annealing temperature by using ambient-temperature compressed air. During this process, a surface layer of the outer glass 10 is rapidly cooled and quickly solidified, and due to the continuous cooling of a core layer of the outer glass 10, the surface layer undergoes a shrinkage stress (usually between 90 megapascals (MPa) and 150 MPa) and generates a surface compressive stress, and the corresponding core layer generates a central tensile stress, so that the outer glass 10 is physically thermally strengthened, and thus the strength of the outer glass 10 can be improved. In some embodiments, the physically thermally strengthened outer glass 10 has a surface stress ranging from 30 MPa to 150 MPa. It may be understood that, since chemical tempering is not needed for the outer glass 10 (reference can be made to a chemical tempering process of the inner glass 20 below), and there is no need for ion exchange, $Li_2O$ does not need to be added to the outer glass 10.

During production of glass, in a melting furnace, a reducing atmosphere contributes to the generation of ferrous iron, and an oxidizing atmosphere contributes to the generation of ferric iron. In addition, since different tail gases may be generated from the combustion of fuel, and the tail gases of different compositions may have different redox abilities, in order to guarantee a color tone of the glass, a high-temperature atmosphere in the furnace needs to be controlled, which is represented by a redox coefficient. This coefficient is generally controlled within a range of 0.2 to 0.4, and the redox coefficient is a coefficient related to various aspects such as reducers, oxidizers, and combustion characteristics. In embodiments of the present disclosure, in the outer glass 10, a ratio of a content of ferrous iron to a content of ferric iron ranges from 0.25 to 0.67. Since iron may exhibit different colors in different valence states, ferrous iron makes the glass colored light blue and has a strong coloring ability, and ferric iron makes the glass colored yellow and has a weak coloring ability, an expected grey black color can only be obtained by controlling the ratio of the content of the ferrous iron to the content of the ferric iron in the outer glass 10 to satisfy the range of 0.25 to 0.67 and mixing with a certain proportion of cobalt for coloring. In some embodiments, a transmitted color of the outer glass 10 has a value of $L$ ranging from 29 to 56, a value of $a$ ranging from -5 to -2, and a value of $b$ ranging from 2 to 4 in a color space Lab. According to a testing system of the CIE1976LAB color space, the values of the transmitted color of the outer glass 10 in the color space Lab are measured based on parameters of illuminant D65 and 10-degree observer, where L represents a lightness value, $a$ represents a red-green chromaticity value, and $b$ represents a yellow-blue chromaticity value.

The composition of the outer glass 10 includes total iron expressed as $Fe_2O_3$, and a mass percentage content of the total iron in the outer glass 10 is $W_{outer}$ based on the mass of the outer glass 10. Exemplarily, $W_{outer}$ ranges from 1 wt% to 1.9 wt%. The composition of the outer glass 10 includes total cobalt $W_{Co}$ expressed as $Co_2O_3$. Exemplarily, based on the mass of the outer glass 10, a mass percentage content $W_{Co}$ of the total cobalt ranges from 0.01 wt% to 0.04 wt%. Both $Fe_2O_3$ and $Co_2O_3$ are added to the outer glass 10, so as to control a color of the outer glass 10. In some specific embodiments, by controlling $W_{outer}$: $W_{Co}$ = 55 - 75, the outer glass 10 can be colored grey black with a relatively low light transmittance. When the ratio of $W_{outer}$ to $W_{Co}$ is out of the range of 55 to 75, for one thing, the color of the outer glass 10 may not conform to expectations, for example, excessive total cobalt may make the outer glass 10 appear dark blue, and excessive total iron may make the outer glass 10 appear blue-green or brown. For another, if a ratio of $Fe_2O_3$ and $Co_2O_3$ is inappropriate, the heat absorption performance of glass melts may change during production of the outer glass 10, so that the heat exchange disorder in the furnace may occur, the fining, homogenizing, and tin-bath thinness-drawing of the glass melts all cannot be successfully completed, and thus the quality of the raw sheet of the outer glass 10 is affected. In addition, a refractive index and a coefficient of thermal expansion of the outer glass 10 may be adjusted by adding $P_2O_5$ and $B_2O_3$ to the composition of the outer glass 10.

Specifically, a system of the inner glass 20 may be soda-lime silicate glass or aluminosilicate glass. The inner glass 20 needs to be chemically strengthened to have a sufficient strength, and is preferably the aluminosilicate glass. Exemplarily, based on a mass of the inner glass 20, a composition of the inner glass 20 provided in this embodiment includes $SiO_2$ of 55 wt% - 65 wt%, $Al_2O_3$ of 0 wt% - 22 wt%, $Na_2O$ of 8 wt% - 18 wt%, $Li_2O$ of 0 wt% - 5 wt%, CaO of 0 wt% - 2 wt%, MgO of 0 wt% - 5 wt%, $K_2O$ of 0 wt% - 10 wt%, $Fe_2O_3$ of 0.08 wt% - 1.9 wt%, $ZrO_2$ of 0 wt% - 2 wt%, $B_2O_3$ of 0 wt% - 5 wt%, and $P_2O_5$ of 0 wt% - 1 wt%.

By using mineral raw materials of the same grade, a raw sheet of the inner glass 20 is produced according to the above composition range of the inner glass 20, and then the raw sheet is sequentially subjected to cutting - edging - thermally bending - chemical tempering, so as to obtain to-be-used inner glass 20. A temperature for the chemical tempering ranges from 380°C to 460°C, and a time for the chemical tempering is between 30 min and 16 h. For the soda-lime silicate glass, preferably, the temperature for the chemical tempering is 420°C, and the time for the chemical tempering ranges from 8 h to 16 h. For the aluminosilicate glass, preferably, the temperature for the chemical tempering is 430°C, and the time for the chemical tempering ranges from 0.5 h to 4 h. In other embodiments of the present disclosure, the inner glass 20 having a thickness within 1.4 mm may also be subjected to cold bending, so as to obtain a required curved surface. The chemical tempering refers to preheating the inner glass 20 to a temperature approximate to the chemical tempering temperature, then putting the inner glass 20 into molten potassium nitrate preset with the tempering temperature, and performing ion exchange for a period of time. An exchange of small-radius $Na^+$ in the glass for large-radius $K^+$ in a salt bath forms the squeezing effect, and a micron-sized stress layer depth and a compressive stress of several hundred MPa are generated on a surface of the inner glass 20, so that the inner glass 20 is chemically tempered, and thus the strength of the inner glass 20 can be improved. In some embodiments, the chemically tempered inner glass 20 has a surface stress ranging from 300 MPa to 1000 MPa.

The composition of the inner glass 20 includes total iron expressed as $Fe_2O_3$. A mass percentage content of the total iron in the inner glass 20 is $W_{inner}$ based on the mass of the inner glass 20. Exemplarily, $W_{inner}$ ranges from 0.08 wt% to 1.9 wt%. Similar to the production of the outer glass 10, under the influence of tail gases generated from the fuel, ferrous iron and ferric iron may be formed after the production of the inner glass 20. In the inner glass 20, a ratio of a content of ferrous iron to a content of ferric iron ranges from 0.25 to 0.67, so as to adjust a color of the inner glass 20. In some embodiments, a transmitted color of the inner glass 20 has a value of $L$ ranging from 29 to 56, a value of $a$ ranging from -5 to -2, and a value of $b$ ranging from 2 to 4 in a color space Lab. A range of the transmitted color of the inner glass 20 in the color space Lab is obtained in the same method for measuring the values of the transmitted color of the outer glass 10 in the color space Lab, and for details, reference can be made to the above content for measuring the values of the transmitted color of the outer glass 10 in the color space Lab. In addition, based on the mass of the inner glass 20, in the composition of the inner glass 20, in addition to $Fe_2O_3$, a content of a colorant for coloring the inner glass 20 is controlled below 0.1 wt% to reduce the content of the colorant, so that the problems that, due to the excessive colorant content, the glass melts at the bottom of the melting furnace are melted difficultly and the raw sheet of the inner glass 20 cannot be produced, may not occur.

In some embodiments, a total content of alkaline-earth metal oxide in the inner glass 20 is less than 5 wt% based on the mass of the inner glass 20. Exemplarily, the alkaline-earth metal oxide includes CaO, MgO, and the like. In terms of controlling a range of the total content of the alkaline-earth metal oxide, for one thing, the alkaline-earth metal oxide is involved as a network intermediate in the structure of the inner glass 20, which may block an ion exchange channel during the chemical tempering of the inner glass 20, thereby reducing the exchange efficiency of $K^+$ in the salt bath used for the chemical tempering and $Na^+$ in the inner glass 20. For another, the alkaline-earth metal oxide, especially CaO, has a significant influence on the service life of the salt bath, and even if a small amount of the alkaline-earth metal oxide enters the potassium nitrate salt bath during the ion exchange, the salt bath will fail and the stress and stress layer depth for chemical tempering will be reduced. Therefore, by controlling the inner glass 20 at a relatively low content, the efficiency of chemical tempering can be improved, and the service life of the salt bath can be extended. In addition, when the total content of the alkaline-earth metal oxide is less than 5 wt%, percentage quotas of a difference between the total content of the alkaline-earth metal oxide and 5 wt% can be given to aluminium oxide or sodium oxide, thereby reducing the production cost of the inner glass 20.

By adding $Li_2O$ to the inner glass 20, the melting temperature of the glass melts can be significantly reduced, and the efficiency of ion exchange can be improved. Adding only a small amount of $Li_2O$ can improve the overall performance of the inner glass. $Li_2O$, $B_2O_3$, and $P_2O_5$ added to the composition of the inner glass 20 can be used to adjust a refractive index and a coefficient of thermal expansion of the inner glass 20, and can also reduce the melting temperature of the glass melts, thereby reducing energy consumption, and improving the efficiency of ion exchange during the chemical tempering of the inner glass 20.

Specifically, the intermediate layer 30 is a polymer layer for bonding the outer glass 10 and the inner glass 20. Exemplarily, the intermediate layer 30 is polyvinyl butyral resin (PVB).

The laminated glass 100 is prepared as follows. A PVB layer is used as the intermediate layer 30 and is placed between the to-be-used outer glass 10 obtained after the physical thermal strengthening and the to-be-used inner glass 20 obtained after the chemical tempering, and the outer glass 10, the intermediate layer 30, and the inner glass 20 are laminated together to obtain the laminated glass 100. In the prepared laminated glass 100, an area of the inner glass 20 is less than an area of the outer glass 10. A thickness of the outer glass 10 is $T_{outer}$ in a unit of mm (millimeter). Exemplarily, $T_{outer}$ ranges from 1.6 mm to 5.0 mm. A thickness of the inner glass 20 is $T_{inner}$ in a unit of mm (millimeter). The thickness $T_{inner}$ of the inner glass 20 is less than the thickness $T_{outer}$ of the outer glass 10, and exemplarily, $T_{inner}$ ranges from 0.1 mm to 1.2 mm. Exemplarily, a thickness of the intermediate layer 30 is 0.76 mm.

In existing asymmetric laminated glass, the outer glass and the inner glass have greatly different colors and thicknesses, and are often produced in different float-melting furnaces. For example, the outer glass with a relatively large thickness often uses a melting furnace with a high tonnage, a high melting volume, and a low melting temperature, and the inner glass with a relatively small thickness often uses a melting furnace with a low tonnage, a low melting volume, and a high melting temperature, which significantly increases the energy consumption cost for producing a raw sheet of glass and the transportation cost of the raw sheet. In the laminated glass 100 of embodiments of the present disclosure, when the content $W_{outer}$ of the total iron in the outer glass 10 is close to the content $W_{inner}$ of the total iron in the inner glass 20, the outer glass 10 and the inner glass 20 can be separately produced in the same furnace, thereby reducing the production cost. When the content $W_{outer}$ of the total iron in the outer glass 10 is equal to the content $W_{inner}$ of the total iron in the inner glass 20, the outer glass 10 can be produced in one furnace and one of two tin-bath - annealing lines, and at the same time the inner glass 20 with a different thickness from the outer glass 10 can be produced in the one furnace and the other one of the two tin-bath - annealing lines, so that the laminated glass 100 with an asymmetric structure is formed, and thus the production cost is reduced. In embodiments of the present disclosure, by setting $W_{outer}$ to be close to or equal to $W_{inner}$, two

production methods for producing the outer glass 10 and the inner glass 20 both can greatly reduce the production cost, so that the raw material cost of the asymmetric laminated glass 100 is close to the cost of laminated glass with a conventional symmetric structure.

In addition, the refractive index of the outer glass 10 may be adjusted by adding $P_2O_5$ and $B_2O_3$ to the composition of the outer glass 10, and the refractive index of the inner glass 20 may be adjusted by adding $Li_2O$, $B_2O_3$, and $P_2O_5$ to the composition of the inner glass 20, so that the refraction of light by the outer glass 10 and the inner glass 20 tends to be consistent. As such, the effect of observing an object through the laminated glass 100 is closer to the effect of a single sheet of glass, thereby reducing the observation position deviation and dispersion effect, and improving the appearance.

Furthermore, the outer glass 10 and the inner glass 20 are adjusted to satisfy: $10\% \geq W_{outer} * T_{outer} + W_{inner} * T_{inner} \geq 4\%$, and thus the laminated glass 100 can have a low visible light transmittance (TL) and total solar energy transmittance (TTL). Therefore, the laminated glass 100 has a good heat insulation effect.

The specific composition and effect experiment of the laminated glass 100 will be described below.

Examples 1 to 11 and comparative examples 1 to 7 all provide laminated glass 100. Compositions of outer glass 10 and inner glass 20 in the laminated glass 100 are illustrated in table 1, and thicknesses and total-iron contents of the outer glass 10 and the inner glass 20 are illustrated in table 2. An intermediate layer 30 is made of PVB and has a thickness of 0.76 mm.

The effect data of the laminated glass 100 of examples 1 to 11 and comparative examples 1 to 7 are measured, the results of which are illustrated in table 3. The effect data includes cost, melting difficulty, TL, and TTS. The TL and TTS are obtained by measuring samples of the laminated glass 100 according to "ISO 9050 Glass in building - Determination of light transmittance, solar direct transmittance, total solar energy transmittance, ultraviolet transmittance and related glazing factors".

Table 1: compositions of outer glass 10 and inner glass 20 in laminated glass 100 of examples 1 to 11 and comparative examples 1 to 7

| No. | | $SiO_2$ | $Al_2O_3$ | $Na_2O$ | $K_2O$ | CaO | MgO | $Fe_2O_3$ | $Co_2O_3$ | $B_2O_3$ | $P_2O_5$ | $Li_2O$ |
|---|---|---|---|---|---|---|---|---|---|---|---|---|
| example 1 | outer glass 10 | 71.5 | 0.5 | 13.8 | 0.36 | 8.8 | 3.2 | 1.8 | 0.03 | 0 | 0.01 | 0 |
| | inner glass 20 | 71.5 | 4 | 16.8 | 1.5 | 0.2 | 4.7 | 1.2 | 0.02 | 0.04 | 0.04 | 0 |
| example 2 | outer glass 10 | 71.5 | 0.5 | 13.8 | 0.36 | 9 | 3.2 | 1.6 | 0.025 | 0 | 0.015 | 0 |
| | inner glass 20 | 71.5 | 4 | 17 | 1.5 | 0.2 | 4.7 | 1 | 0.015 | 0.04 | 0.045 | 0 |
| example 3 | outer glass 10 | 71.5 | 0.5 | 14 | 0.36 | 9 | 3.2 | 1.4 | 0.02 | 0 | 0.02 | 0 |
| | inner glass 20 | 71.5 | 4 | 16.9 | 2 | 0.2 | 4.7 | 0.6 | 0.01 | 0.04 | 0.05 | 0 |
| example 4 | outer glass 10 | 71.5 | 0.5 | 14 | 0.36 | 9 | 3.4 | 1.2 | 0.02 | 0 | 0.02 | 0 |
| | inner glass 20 | 61 | 13 | 15 | 6.2 | 0 | 4.6 | 0.1 | 0.0015 | 0.05 | 0.0485 | 0 |

(continued)

| No. | | SiO$_2$ | Al$_2$O$_3$ | Na$_2$O | K$_2$O | CaO | MgO | Fe$_2$O$_3$ | Co$_2$O$_3$ | B$_2$O$_3$ | P$_2$O$_5$ | Li$_2$O |
|---|---|---|---|---|---|---|---|---|---|---|---|---|
| example 5 | outer glass 10 | 71.5 | 0.5 | 14.2 | 0.56 | 9 | 3.2 | 1 | 0.015 | 0 | 0.025 | 0 |
| | inner glass 20 | 61 | 13 | 14.5 | 6.2 | 0 | 4.6 | 0.08 | 0.0012 | 0.05 | 0.0688 | 0.5 |
| example 6 | outer glass 10 | 70.4 | 4 | 16.8 | 1.5 | 0.2 | 4.7 | 1.8 | 0.03 | 0.03 | 0.04 | 0.5 |
| | inner glass 20 | 70.4 | 4 | 16.8 | 1.5 | 0.2 | 4.7 | 1.8 | 0.03 | 0.03 | 0.04 | 0.5 |
| example 7 | outer glass 10 | 71.5 | 0.5 | 13.8 | 0.36 | 8.8 | 3.2 | 1.8 | 0.03 | 0 | 0.01 | 0 |
| | inner glass 20 | 70.4 | 4 | 16.8 | 1.5 | 0.2 | 4.7 | 1.8 | 0.03 | 0.03 | 0.04 | 0.5 |
| example 8 | outer glass 10 | 71.5 | 0.5 | 13.8 | 0.36 | 9 | 3.2 | 1.6 | 0.025 | 0 | 0.015 | 0 |
| | inner glass 20 | 71.5 | 4 | 16.8 | 1.5 | 0.2 | 4.7 | 1.2 | 0.02 | 0.04 | 0.04 | 0 |
| example 9 | outer glass 10 | 71.5 | 0.5 | 14 | 0.36 | 9 | 3.2 | 1.4 | 0.02 | 0 | 0.02 | 0 |
| | inner glass 20 | 71.5 | 4 | 17 | 1.7 | 0.2 | 4.7 | 0.8 | 0.012 | 0.04 | 0.048 | 0 |
| example 10 | outer glass 10 | 71.5 | 0.5 | 14 | 0.36 | 9 | 3.4 | 1.2 | 0.02 | 0 | 0.02 | 0 |
| | inner glass 20 | 61 | 13 | 15 | 6.2 | 0 | 4.6 | 0.1 | 0.0015 | 0.05 | 0.0485 | 0 |
| example 11 | outer glass 10 | 71.5 | 0.5 | 14.2 | 0.56 | 9 | 3.2 | 1 | 0.015 | 0 | 0.025 | 0 |
| | inner glass 20 | 61 | 13 | 14.5 | 6.2 | 0 | 4.6 | 0.08 | 0.0012 | 0.05 | 0.0688 | 0.5 |
| comparative example 1 | outer glass 10 | 71.5 | 0.5 | 14.2 | 0.56 | 9 | 3.2 | 1 | 0.015 | 0 | 0.025 | 0 |
| | inner glass 20 | 71.5 | 4 | 17 | 1.5 | 0.2 | 4.7 | 1 | 0.015 | 0.04 | 0.045 | 0 |

(continued)

| No. | | SiO$_2$ | Al$_2$O$_3$ | Na$_2$O | K$_2$O | CaO | MgO | Fe$_2$O$_3$ | Co$_2$O$_3$ | B$_2$O$_3$ | P$_2$O$_5$ | Li$_2$O |
|---|---|---|---|---|---|---|---|---|---|---|---|---|
| comparative example 2 | outer glass 10 | 71.5 | 0.5 | 13.6 | 0.36 | 8.8 | 3.2 | 2 | 0.03 | 0 | 0.01 | 0 |
| | inner glass 20 | 61 | 13 | 15 | 6.2 | 0 | 4.6 | 0.1 | 0.0015 | 0.05 | 0.0485 | 0 |
| comparative example 3 | outer glass 10 | 71.5 | 0.5 | 14.4 | 0.56 | 9 | 3.2 | 0.8 | 0.012 | 0 | 0.028 | 0 |
| | inner glass 20 | 61 | 13 | 14.6 | 6.2 | 0 | 4.6 | 0.01 | 0 | 0.05 | 0.04 | 0.5 |
| comparative example 4 | outer glass 10 | 71.5 | 0.5 | 14.4 | 0.56 | 9 | 3.2 | 0.8 | 0.012 | 0 | 0.028 | 0 |
| | inner glass 20 | 70.4 | 4 | 16.6 | 1.5 | 0.2 | 4.7 | 2 | 0.03 | 0.03 | 0.04 | 0.5 |
| comparative example 5 | outer glass 10 | 71.5 | 0.5 | 14 | 0.36 | 9 | 3.4 | 1.2 | 0.02 | 0 | 0.02 | 0 |
| | inner glass 20 | 61 | 13 | 14.6 | 6.2 | 0 | 4.6 | 0.01 | 0 | 0.05 | 0.04 | 0.5 |
| comparative example 6 | outer glass 10 | 71.5 | 0.5 | 14.4 | 0.56 | 9 | 3.2 | 0.8 | 0.012 | 0 | 0.028 | 0 |
| | inner glass 20 | 61 | 13 | 14.6 | 6.2 | 0 | 4.6 | 0.01 | 0 | 0.05 | 0.04 | 0.5 |
| comparative example 7 | outer glass 10 | 71.5 | 0.5 | 13.6 | 0.36 | 8.8 | 3.2 | 2 | 0.03 | 0 | 0.01 | 0 |
| | inner glass 20 | 70.4 | 4 | 16.6 | 1.5 | 0.2 | 4.7 | 2 | 0.03 | 0.03 | 0.04 | 0.5 |

Table 2: thicknesses and total-iron contents of outer glass 10 and inner glass 20 in laminated glass 100 of examples 1 to 11 and comparative examples 1 to 7

| No. | outer glass 10 thickness/mm | outer glass 10 Fe$_2$O$_3$ content/wt% | inner glass 20 thickness/mm | inner glass 20 Fe$_2$O$_3$ content/wt% | $W_{outer} * T_{outer} + W_{inner} * T_{inner}$ (%) |
|---|---|---|---|---|---|
| example 1 | 2.1 | 1.8 | 1.1 | 1.2 | 5.1 |
| example 2 | 2.5 | 1.6 | 1.1 | 1 | 5.1 |
| example 3 | 3.2 | 1.4 | 1.1 | 0.6 | 5.14 |
| example 4 | 3.5 | 1.2 | 1.1 | 0.1 | 4.31 |

(continued)

| No. | outer glass 10 thickness/mm | outer glass 10 $Fe_2O_3$ content/wt% | inner glass 20 thickness/mm | inner glass 20 $Fe_2O_3$ content/wt% | $W_{outer} * T_{outer} + W_{inner} * T_{inner}$ (%) |
|---|---|---|---|---|---|
| example 5 | 4 | 1 | 1.1 | 0.08 | 4.088 |
| example 6 | 4 | 1.8 | 1.1 | 1.8 | 9.18 |
| example 7 | 2.1 | 1.8 | 0.7 | 1.8 | 5.04 |
| example 8 | 2.5 | 1.6 | 0.7 | 1.2 | 4.84 |
| example 9 | 3.2 | 1.4 | 0.7 | 0.8 | 5.04 |
| example 10 | 3.5 | 1.2 | 0.7 | 0.1 | 4.27 |
| example 11 | 4 | 1 | 0.7 | 0.08 | 4.056 |
| comparative example 1 | 2.1 | 1 | 0.7 | 1 | 2.8 |
| comparative example 2 | 2.1 | 2 | 1.1 | 0.1 | 4.31 |
| comparative example 3 | 2.1 | 0.8 | 1.1 | 0.01 | 1.691 |
| comparative example 4 | 3.5 | 0.8 | 0.7 | 2 | 4.2 |
| comparative example 5 | 3.5 | 1.2 | 1.1 | 0.01 | 4.211 |
| comparative example 6 | 3.5 | 0.8 | 1.1 | 0.01 | 2.811 |
| comparative example 7 | 4 | 2 | 1.1 | 2 | 10.2 |

Table 3: effect data of laminated glass 100 of examples 1 to 11 and comparative examples 1 to 7

| No. | outer glass 10 batch cost | outer glass 10 batch melting difficulty | inner glass 20 batch cost | inner glass 20 batch melting difficulty | laminated glass 100 TL/% | laminated glass 100 TTS/% |
|---|---|---|---|---|---|---|
| example 1 | low | medium | low | low | 17.1 | 31.6 |
| example 2 | low | medium | low | low | 17.0 | 31.5 |
| example 3 | low | medium | low | low | 16.9 | 31.3 |
| example 4 | low | low | low | low | 22.5 | 36.8 |
| example 5 | low | low | low | low | 24.2 | 38.4 |
| example 6 | low | medium | low | medium | 7.0 | 21.1 |
| example 7 | low | medium | low | medium | 17.5 | 31.9 |
| example 8 | low | medium | low | low | 18.8 | 33.2 |
| example 9 | low | medium | low | low | 17.5 | 31.9 |
| example 10 | low | low | low | low | 22.8 | 37.1 |
| example 11 | low | low | low | low | 24.5 | 38.7 |
| comparative example 1 | low | low | low | low | 35.8 | 49.6 |
| comparative example 2 | low | high | low | low | 22.5 | 36.8 |
| comparative example 3 | low | low | high | low | 70.8 | 68.9 |
| comparative example 4 | low | low | low | high | 23.3 | 37.6 |
| comparative example 5 | low | low | high | low | 23.2 | 37.5 |
| comparative example 6 | low | low | high | low | 35.7 | 49.5 |

(continued)

| No. | outer glass 10 batch cost | outer glass 10 batch melting difficulty | inner glass 20 batch cost | inner glass 20 batch melting difficulty | laminated glass 100 TL/% | laminated glass 100 TTS/% |
|---|---|---|---|---|---|---|
| comparative example 7 | low | high | low | high | 5.5 | 18.7 |

As can be seen from table 1 to table 3, in comparative example 1, both a content $W_{outer}$ of total iron in the outer glass 10 and a content $W_{inner}$ of total iron in the inner glass 20 are 1 wt%, the contents of the total iron are in an appropriate range, but $W_{outer} * T_{outer} + W_{inner} * T_{inner}$ is too low and does not satisfy the range of 4% to 10%. The resulting laminated glass 100 in comparative example 1 has an excessively high visible TL and TTS and has an insufficient heat insulation performance, which cannot satisfy actual heat insulation requirements when used as sunroof glass or the like. In comparative example 7, the content $W_{outer}$ of the total iron in the outer glass 10 is as high as 2 wt%, the content $W_{inner}$ of the total iron in the inner glass 20 is as high as 2 wt%, the contents of a colorant $Fe_2O_3$ in the outer glass 10 and the inner glass 20 are both too high, and $W_{outer} * T_{outer} + W_{inner} * T_{inner}$ in the laminated glass 100 is too high, exceeding 10 wt%. Although the resulting laminated glass 100 in comparative example 7 has a relatively low visible TL and TTS, there are difficulties in the melting, fining, and homogenizing of glass melts during production of the outer glass 10 and the inner glass 20, and there are difficulties in the mass production of a raw sheet of the outer glass 10 and a raw sheet of the inner glass 20. In the laminated glass 100 provided in examples 1 to 11 of the present disclosure, both the content $W_{outer}$ of the total iron in the outer glass 10 and the content $W_{inner}$ of the total iron in the inner glass 20 are appropriate, and neither the outer glass 10 nor the inner glass 20 uses conventional clear glass, so the cost is not too high. In addition, the batch melting difficulties of the compositions of the outer glass 10 and the inner glass 20 are not high, so that the raw sheets of the outer glass 10 and the inner glass 20 are easily formed, and thus the laminated glass 100 is easily prepared. Furthermore, the laminated glass 100 provided in examples 1 to 11 of the present disclosure has a low visible TL and TTS and has a high heat insulation performance, which can fully satisfy the requirements of the sunroof glass and the like for heat insulation performance.

In comparative example 2, the content $W_{outer}$ of the total iron in the outer glass 10 is as high as 2 wt%, which is too high, and the batch melting difficulty of the composition of the outer glass 10 makes it difficult to produce the raw sheet of the outer glass 10. In comparative example 4, the content $W_{inner}$ of the total iron in the inner glass 20 is as high as 2 wt%, there are difficulties in the melting, fining, and homogenizing of glass melts during production of the inner glass 20, and there are difficulties in the mass production of the raw sheet of the inner glass 20. In the laminated glass 100 provided in examples 1 to 11 of the present disclosure, the content $W_{outer}$ of the total iron in the outer glass 10 is controlled between 1 wt% and 1.9 wt%, which ensures that the composition batches of the outer glass 10 can be easily melted, fined, and homogenized, thereby guaranteeing the production of the raw sheet of the outer glass 10. In some embodiments, $W_{outer}$ preferably ranges from 1.1 wt% to 1.8 wt%. The content $W_{inner}$ of the total iron in the inner glass 20 is controlled between 0.08 wt% and 1.9 wt%, which ensures that the composition batches of the outer glass 10 can be easily melted, fined, and homogenized, thereby guaranteeing the production of the raw sheet of the inner glass 20. In some embodiments, $W_{inner}$ preferably ranges from 0.5 wt% to 1.8 wt%, and further $W_{inner}$ preferably ranges from 1.0 wt% to 1.8 wt%.

In comparative example 3, the laminated glass 100 belongs to a conventional combination in which the outer glass 10 is green glass and the inner glass 20 is ultra-clear glass, and expensive and high purity grade raw materials such as silica sand are required for the production of the inner glass 20. In addition, during melting, fining, and homogenizing of the ultra-clear glass or clear glass in a glass furnace, since the glass melts have a high transmittance and do not absorb heat, more fuel supply is required to reach a specific temperature, and accordingly, refractory bricks of the glass furnace are required to have a high refractory grade and are easily damaged, the raw material cost and the production energy consumption cost of the clear glass are significant. Furthermore, the laminated glass 100 of comparative example 3 has an excessively high visible TL and TTS, and has a poor heat insulation performance, which cannot satisfy actual heat insulation requirements when used as the sunroof glass or the like. In comparative example 5, the laminated glass 100 belongs to a conventional combination in which the outer glass 10 is grey glass and the inner glass 20 is ultra-clear glass, and the production cost of the raw sheet of the inner glass 20 is too high. In the laminated glass 100 provided in examples 1 to 11 of the present disclosure, the outer glass 10 and the inner glass 20 both contain the colorant $Fe_2O_3$, neither of which uses untinted ultra-clear glass or clear glass. The laminated glass 100 of comparative example 6 belongs to a conventional combination in which the outer glass 10 is green glass and the inner glass 20 is ultra-clear glass. The laminated glass 100 of comparative example 6 has an excessively high visible TL and TTS and has a poor heat insulation performance, and the production cost of the raw sheet of the inner glass 20 is too high. Compared with using the ultra-clear glass or clear glass, the laminated glass 100 of the present disclosure is tinted glass containing iron, which ensures the optical performance of the laminated glass and reduces the cost of the outer glass 10 and the inner glass 20, thereby reducing the production cost of the laminated glass 100.

The above embodiments are only preferred embodiments of the disclosure and cannot be understood as limitations on the disclosure. Those of ordinary skill in the art can understand that all or part of methods for realizing the above embodiments, and equivalent changes made in accordance with the claims of the disclosure, still fall within the scope covered by the disclosure.

**Claims**

1. Laminated glass, comprising outer glass, an intermediate layer, and inner glass, wherein the intermediate layer is located between the outer glass and the inner glass, a composition of the outer glass and a composition of the inner glass both comprise total iron expressed as $Fe_2O_3$, a mass percentage content of the total iron in the outer glass is $W_{outer}$ based on a mass of the outer glass, a mass percentage content of the total iron in the inner glass is $W_{inner}$ based on a mass of the inner glass, and $W_{outer}$ and $W_{inner}$ satisfy: $10\% \geq W_{outer} * T_{outer} + W_{inner} * T_{inner} \geq 4\%$, $T_{outer}$ being a thickness of the outer glass in a unit of mm, and $T_{inner}$ being a thickness of the inner glass in a unit of mm.

2. The laminated glass of claim 1, wherein $W_{outer}$ ranges from 1 wt% to 1.9 wt%, and $W_{inner}$ ranges from 0.08 wt% to 1.9 wt%.

3. The laminated glass of claim 2, wherein $T_{outer}$ ranges from 1.6 mm to 5.0 mm, and $T_{inner}$ ranges from 0.1 mm to 1.2 mm.

4. The laminated glass of any one of claims 1 to 3, wherein the laminated glass has a total solar energy transmittance less than or equal to 45 wt%.

5. The laminated glass of any one of claims 1 to 3, wherein the laminated glass has a visible light transmittance less than or equal to 25 wt%.

6. The laminated glass of claim 1, wherein in the outer glass, a ratio of a content of ferrous iron to a content of ferric iron ranges from 0.25 to 0.67; and in the inner glass, a ratio of a content of ferrous iron to a content of ferric iron ranges from 0.25 to 0.67.

7. The laminated glass of claim 1, wherein the composition of the outer glass further comprises total cobalt expressed as $Co_2O_3$, a mass percentage content of the total cobalt in the outer glass is $W_{Co}$ based on the mass of the outer glass, and $W_{Co}$ ranges from 0.01 wt% to 0.04 wt%.

8. The laminated glass of claim 7, wherein $W_{outer}$: $W_{Co}$ = 55 - 75.

9. The laminated glass of claim 1, wherein based on the mass of the outer glass, the composition of the outer glass comprises $SiO_2$ of 65 wt% - 75 wt%, $Na_2O$ of 10 wt% - 20 wt%, CaO of 5 wt% - 15 wt%, MgO of 0 wt% - 5 wt%, $K_2O$ of 0 wt% - 3 wt%, $Al_2O_3$ of 0 wt% - 5 wt%, $Fe_2O_3$ of 1 wt% - 1.9 wt%, $Co_2O_3$ of 0.01 wt% - 0.1 wt%, $Cr_2O_3$ of 0 wt% - 0.1 wt%, $CeO_2$ of 0 wt% - 0.1 wt%, MnO of 0 wt% - 0.01 wt%, NiO of 0 wt% - 0.01 wt%, $ZrO_2$ of 0 wt% - 1 wt%, $B_2O_3$ of 0 wt% - 1 wt%, and $P_2O_5$ of 0 wt% - 1 wt%.

10. The laminated glass of claim 1, wherein based on the mass of the inner glass, the composition of the inner glass comprises $SiO_2$ of 55 wt% - 65 wt%, $Al_2O_3$ of 0 wt% - 22 wt%, $Na_2O$ of 8 wt% - 18 wt%, $Li_2O$ of 0 wt% - 5 wt%, CaO of 0 wt% - 2 wt%, MgO of 0 wt% - 5 wt%, $K_2O$ of 0 wt% - 10 wt%, $Fe_2O_3$ of 0.08 wt% - 1.9 wt%, $ZrO_2$ of 0 wt% - 2 wt%, $B_2O_3$ of 0 wt% - 5 wt%, and $P_2O_5$ of 0 wt% - 1 wt%.

11. The laminated glass of claim 1, wherein the composition of the inner glass comprises alkaline-earth metal oxide, and a total content of the alkaline-earth metal oxide is less than 5 wt% based on the mass of the inner glass.

12. The laminated glass of claim 1, wherein a transmitted color of the outer glass has a value of *L* ranging from 29 to 56, a value of *a* ranging from -5 to -2, and a value of *b* ranging from 2 to 4 in a color space Lab.

13. The laminated glass of claim 1, wherein a transmitted color of the inner glass has a value of *L* ranging from 40 to 92, a value of *a* ranging from -4 to 1, and a value of *b* ranging from 0 to 2 in a color space Lab.

14. A vehicle, comprising a vehicle body and the laminated glass of any one of claims 1 to 13, wherein the laminated glass is mounted at the vehicle body.

1000

200

100

Y

X ⟵ ⊗Z

FIG. 1

FIG. 2

## INTERNATIONAL SEARCH REPORT

| International application No. |
|---|
| **PCT/CN2023/124644** |

| A. | CLASSIFICATION OF SUBJECT MATTER |
|---|---|

C03C27/12(2006.01)i; C03C3/097(2006.01)i; C03C3/095(2006.01)i; C03C3/093(2006.01)i; C03C3/091(2006.01)i; C03C3/089(2006.01)i; C03C3/087(2006.01)i; C03C3/078(2006.01)i; B60J1/18(2006.01)i; B60J1/08(2006.01)i; B60J1/00(2006.01)i

According to International Patent Classification (IPC) or to both national classification and IPC

| B. | FIELDS SEARCHED |
|---|---|

Minimum documentation searched (classification system followed by classification symbols)

    IPC: C03C; B60J

Documentation searched other than minimum documentation to the extent that such documents are included in the fields searched

Electronic data base consulted during the international search (name of data base and, where practicable, search terms used)

    CNTXT, EXTXTC, WPABS, DWPI, EXTXT, 中国期刊网全文数据库, CJFD, ISI Web of Science: 福耀, 林军, 王哲, 王立, 玻璃, 夹层, 多层, 层压, 中间层, 中间膜, 铁, 氧化铁, 氧化亚铁, 钴, 氧化钠, 氧化镁, 氧化钙, 强化, 钢化, 车, glass, laminat+, intermediate film, Fe, Fe2O3, FeO, Co, Co2O3, Co3O4, Na2O, MgO, CaO, strengthen+, temper+, car, vehicle

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115594421 A (FUYAO GLASS INDUSTRY GROUP CO., LTD.) 13 January 2023 (2023-01-13)<br>claims 1-14 | 1-14 |
| X | CN 1823021 A (PILKINGTON PLC. et al.) 23 August 2006 (2006-08-23)<br>description, page 11, paragraph 1, page 13, paragraphs 2-4, figure 2, and table 3 | 1-14 |
| X | US 2004219368 A1 (GLAVERBEL) 04 November 2004 (2004-11-04)<br>description, paragraphs 0073-0092 | 1-14 |
| X | US 5849402 A (SAINT GOBAIN VITRAGE) 15 December 1998 (1998-12-15)<br>claims 1-15, and description, column 7, embodiments 1-2 | 1-14 |
| A | CN 106698928 A (CAIHONG DISPLAY DEVICES CO., LTD.) 24 May 2017 (2017-05-24)<br>entire document | 1-14 |
| A | CN 101400515 A (PILKINGTON AUTOMOTIVE LTD.) 01 April 2009 (2009-04-01)<br>entire document | 1-14 |

☑ Further documents are listed in the continuation of Box C.     ☑ See patent family annex.

| | |
|---|---|
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **08 December 2023** | **20 December 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/124644** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110366545 A (SAINT-GOBAIN GLASS FRANCE S.A.) 22 October 2019 (2019-10-22)<br>entire document | 1-14 |

## INTERNATIONAL SEARCH REPORT
### Information on patent family members

International application No.

**PCT/CN2023/124644**

| Patent document cited in search report | | | Publication date (day/month/year) | Patent family member(s) | | | Publication date (day/month/year) |
|---|---|---|---|---|---|---|---|
| CN | 115594421 | A | 13 January 2023 | None | | | |
| CN | 1823021 | A | 23 August 2006 | GB | 2403731 | A | 12 January 2005 |
| | | | | WO | 2005007592 | A2 | 27 January 2005 |
| | | | | US | 2006182980 | A1 | 17 August 2006 |
| | | | | US | 7943246 | B2 | 17 May 2011 |
| | | | | US | 2011217535 | A1 | 08 September 2011 |
| | | | | US | 8632886 | B2 | 21 January 2014 |
| | | | | JP | 2012067010 | A | 05 April 2012 |
| | | | | JP | 5759355 | B2 | 05 August 2015 |
| | | | | JP | 2007527353 | A | 27 September 2007 |
| | | | | JP | 5171036 | B2 | 27 March 2013 |
| | | | | EP | 3521015 | A1 | 07 August 2019 |
| | | | | EP | 3521015 | B1 | 06 September 2023 |
| | | | | EP | 1644293 | B1 | 05 December 2018 |
| | | | | EP | 1644293 | B2 | 13 April 2022 |
| | | | | EP | 1644293 | A2 | 12 April 2006 |
| | | | | CN | 1823021 | B | 25 July 2012 |
| US | 2004219368 | A1 | 04 November 2004 | US | 2006134438 | A1 | 22 June 2006 |
| | | | | EP | 1200256 | A1 | 02 May 2002 |
| | | | | EP | 1200256 | B1 | 31 May 2006 |
| | | | | WO | 0102167 | A1 | 11 January 2001 |
| US | 5849402 | A | 15 December 1998 | JP | 2006175877 | A | 06 July 2006 |
| | | | | JP | 4237760 | B2 | 11 March 2009 |
| | | | | EP | 0687554 | A1 | 20 December 1995 |
| | | | | EP | 0687554 | B1 | 15 May 2002 |
| | | | | JP | 3884092 | B2 | 21 February 2007 |
| | | | | US | 6010775 | A | 04 January 2000 |
| | | | | KR | 960000485 | A | 25 January 1996 |
| | | | | KR | 100353102 | B1 | 15 March 2003 |
| | | | | JP | 2008308404 | A | 25 December 2008 |
| | | | | JP | 5080390 | B2 | 21 November 2012 |
| CN | 106698928 | A | 24 May 2017 | None | | | |
| CN | 101400515 | A | 01 April 2009 | KR | 20080108080 | A | 11 December 2008 |
| | | | | KR | 101447896 | B1 | 08 October 2014 |
| | | | | JP | 2009526731 | A | 23 July 2009 |
| | | | | JP | 5121733 | B2 | 16 January 2013 |
| | | | | US | 2009098354 | A1 | 16 April 2009 |
| | | | | US | 9102123 | B2 | 11 August 2015 |
| | | | | WO | 2007093828 | A1 | 23 August 2007 |
| | | | | EP | 1986848 | A1 | 05 November 2008 |
| | | | | EP | 1986848 | B1 | 13 December 2017 |
| | | | | CN | 101400515 | B | 25 June 2014 |
| CN | 110366545 | A | 22 October 2019 | US | 2021060905 | A1 | 04 March 2021 |
| | | | | US | 11472162 | B2 | 18 October 2022 |
| | | | | KR | 20200115512 | A | 07 October 2020 |
| | | | | EP | 3743396 | A1 | 02 December 2020 |
| | | | | EP | 3743396 | B1 | 16 August 2023 |
| | | | | WO | 2019145638 | A1 | 01 August 2019 |
| | | | | JP | 2021510665 | A | 30 April 2021 |

Form PCT/ISA/210 (patent family annex) (July 2022)

## INTERNATIONAL SEARCH REPORT
### Information on patent family members

International application No.

**PCT/CN2023/124644**

| Patent document cited in search report | Publication date (day/month/year) | Patent family member(s) | | Publication date (day/month/year) |
|---|---|---|---|---|
| | | JP 7261237 B2 | | 19 April 2023 |

Form PCT/ISA/210 (patent family annex) (July 2022)

**EP 4 578 841 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211265283